# EUROPEAN PATENT SPECIFICATION

(11) **EP 2 242 377 B1**
(45) Date of publication and mention of the grant of the patent: **18.02.2015**
(21) Application number: 08876079.8
(22) Date of filing: 27.10.2008
(51) Int. Cl.: A23G 9/12, A23G 9/30

(54) **APPARATUS FOR PREPARING, EXPOSING AND SELLING THERMALLY TREATED FOOD PRODUCTS**
VORRICHTUNG ZUM ZUBEREITEN, DARBIETEN UND VERKAUFEN VON WÄRMEBEHANDELTEN NAHRUNGSMITTELPRODUKTEN
APPAREIL DE PRÉPARATION, PRÉSENTATION ET VENTE DE PRODUITS ALIMENTAIRES TRAITÉS THERMIQUEMENT

(43) Date of publication of application: 27.10.2010
(73) Proprietor: Ali S.p.A.-Carpigiani, 20123 Milano (IT)
(72) Inventor: GROTTI, Renzo, I-40013 Castelmaggiore (BO) (IT)
(74) Representative: Marietti, Andrea
(86) International application number: PCT/IT2008/000666
(87) International publication number: WO 2010/049955

(56) References cited:
- WO-A-93/19616
- FR-A- 1 120 396
- FR-A- 2 806 928
- GB-A- 1 183 551
- US-A- 3 029 613

## Description

### FIELD OF THE INVENTION

The present invention concerns an equipment for preparing foodstuffs requiring thermal treatments and a contemporaneous mixing action during the production steps.

A typical example of such foodstuffs is constituted by the Italian ice cream or similar products, such as for example crushed ice, but also substances obtainable from a heating thermal treatment, as various edible cream kinds.

The present equipment further allows exposition and selling of the afore mentioned products.

### KWOWN ART

The traditional machines for preparing products subjected to thermal treatment, such as for example ice - cream makers, are generally situated in a different room relative to the shop portion intended for selling, therefore being accessible to personnel only and not to clients.

These types of machines present a batch cylinder receptacle wherein the ingredients necessary for the product preparation are introduced, and an impeller provided with some blades, allowing its stirring.

The receptacle wherein the preparation takes place is subjected to a fluid action having specified thermal characteristics, in contact with the outer side surface of the batch cylinder, in order that the thermal transfer could be ensured.

The rotary stirring movement imposed by the impeller, with the thermal liquid action, allows to obtain the finished product conditions.

According to the known art, at the end of the processing, the product is drained from the batch cylinder and placed in a cooled environment for preservation, or in exposition tubs that will be placed in the display counter in the shop area intended for selling.

The product handling from the batch cylinder into the tubs and, by these, into the cooler or the display counter, presents hygiene problems and deterioration of the product organoleptic characteristics.

In the ending step of the production cycle, the batch cylinder will be subjected to appropriate washing and sanitizing, operations that usually take place with high temperature water pressurized jets, or steam.

As the known machines are placed in an environment separate from the selling one, they show the drawback of impeding the consumer to assist the preparation product steps and those following the washing of the machine and particularly of the batch cylinder.

In fact, the buyer will directly see the finished product placed in receptacles on the display counter, being different from those wherein it has being produced.

Further machines for preparing ice-creams relevant to the present invention are known from the following publications:

GB-A-1183551 discloses a machine for the selective production of ice-cream comprising a freezing can surrounded by an expansion coil, a dasher attachment, a motor and a compressor. The freezing can and the surrounding coil are covered with an insulating jacket for improving the cooling effectiveness of the expansion coil. Said dasher attachment comprises a stem ending at its top end with a handgrip and at the opposite end with a non-cylindrical extension. The freezing can is cleaned upon pulling out the dasher and by flowing tap water into the can. The water flows out of the can through an axial bore of a cylindrical hub, down into and out of a drawer-like outlet channel. The motor is externally connected to the cylindrical hub secured to or integral with the freezing can, thus no insulation is required for avoiding a product leakage. When the motor is powered up, the motor drives through pinion and gear wheel, the counter-plate and the dasher attachment coupled to said counter plate through shaft extension.

FR-A-1120396 relates to a machine for the preparation of ice cream comprising a freezing recipient fixed on a bearing structure and equipped with a central shaft which is rotated by a motor externally fixed to the bearing structure of the recipient. Said central shaft rotates a shaft provided with blades for mixing the ice cream ingredients in the recipient. The recipient is provided with an aperture at its bottom for draining the washing liquid. Said aperture is closed by a plug which can be manually opened during the washing process step.

### OBJECT OF THE INVENTION

The equipment object of the present invention according to claim 1 is intended to be directly placed in the store area planned for selling. For this reason, it allows to prepare the product and the machine washing at the client sight. In other words, the production and selling places coincide.

The client will watch the production step, being advantageously able to appreciate the quality of the used ingredients.

Further, the present equipment does not require outer receptacles for transferring the finished product thereto, as a matter of fact this latter will be drawn out directly from the equipment wherein the production takes place.

The equipment is intended to be attached under a display counter, allowing to produce and directly retail the Italian ice cream or the foodstuffs afore mentioned, without being carried or handled before the withdrawal for selling, as mentioned, in outer tubs for transport and exposure.

For these reasons, the washing and sanitizing operations, that are very important for these productions, will take place at the client sight too, without the requirement of moving the equipment. However these operations cause the problem that it is not possible to take out the receptacles for a washing and sanitizing treatment of traditional type.

It is therefore an object of the present invention to provide an equipment of the mentioned type according to claim 1, which vessels could be subjected to the necessary washing and sanitizing treatments without their withdrawal from the equipment

These and other objects are obtained by an equipment according to claim 1 for preparing, exposing and selling foodstuffs subjected to thermal treatments according to the first independent claim and the subsequent claims depending therefrom.

The present equipment for preparing, exposing and selling foodstuffs subjected to thermal treatments comprises a not removable cylindrical receptacle, at least one removable impeller, at least one drive shaft and at least one coil for fluid passage for thermal treatment.

The equipment is characterized by comprising at least one drain duct, axially arranged inside the drive shaft, and used to eliminate the fluid by which the machine washing is carried out.

The removable impeller is partially housed in the drain duct that is, as afore mentioned, axially arranged inside the drive shaft.

The drain duct is in fluidic communication with the cylindrical receptacle when the impeller is not mounted in the equipment.

The ingredient intake and their mixing are visible by the client and once the process is ended, the product might be directly served from the receptacle wherein it has been prepared.

For these reasons, it will not be necessary a product movement from the preparation to the exposition place, as it happens in the machines known in the art.

After the whole product in the equipment has been sold, the washing and sanitizing operations will take place, directly over the display counter too after the impeller removal, that will be washed separately.

The wash will take place by a washing and sanitizing fluid injected in the equipment. In fact, not being able to remove the receptacle wherein the production and successively the product selling take place, the wash will necessarily have to take place by a fluid flow directly put into the equipment.

The washing fluid ejection is guaranteed by a drain internally placed into the drive shaft.

It has to be noticed that during the production steps, the impeller, inserted inside the cylindrical receptacle, is connected to the drive shaft by a stem that is partially fitted into the drain duct, which comprise means for coupling the impeller to the drive shaft.

The impeller stem assures the coupling to the drive shaft and the blockage of the drain duct, so that the ingredient leaking during the processing step, and of the finished product during the exposing steps, are prevented.

After the product selling contained in the equipment, the impeller will be removed and separately washed.

The cylindrical receptacle will be in fluidic communication with the drain duct, by which the washing fluid and the product remains will be removed.

### BRIEF DESCRIPTION OF THE DRAWINGS

These and other advantages will be evident from the following description and the drawings in attachment for illustrative and not limitative purposes, wherein:
Fig. 1 is a section view of an equipment according to the invention, without the impeller;
Fig. 2 is a perspective view of the impeller;
Fig. 3 is a section view of the equipment according to the invention, wherein the impeller is mounted;
Fig. 4 is a detail of the cylindrical receptacle base of the equipment with the mounted impeller, according to the part A identified in figure 3;
Fig. 5 is a section view of the equipment according to the invention to which a lid for wash and sanitization is mounted;
Fig. 6 is a perspective view of the equipment according to the invention and of the lid for wash and sanitization, according to figure 5;
Fig. 7 is a draining collector detail, according to the part B identified in figure 1.

### EMBODIMENT OF THE INVENTION

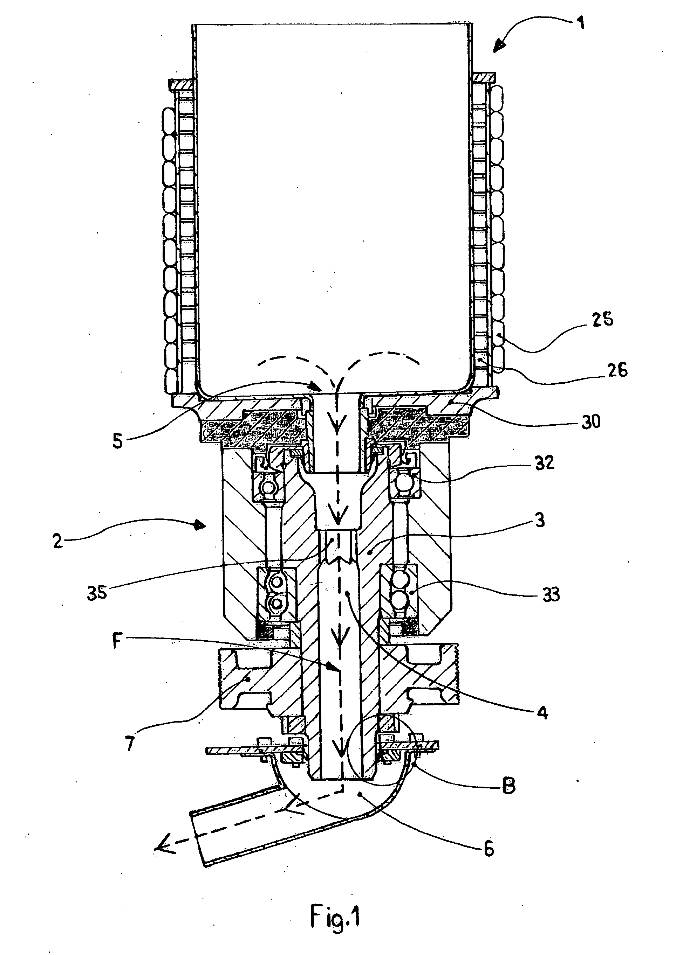

Referring to figure 1, the equipment object of the present invention according to claim 1, in its preferred embodiment herein illustrated, comprises a batch cylindrical receptacle 1, not removable, having a cylindrical body 2 extending from its base portion.

Inside the cylindrical body 2, that is integral with the cylindrical receptacle 1, a drive shaft 3 is rotatably attached.

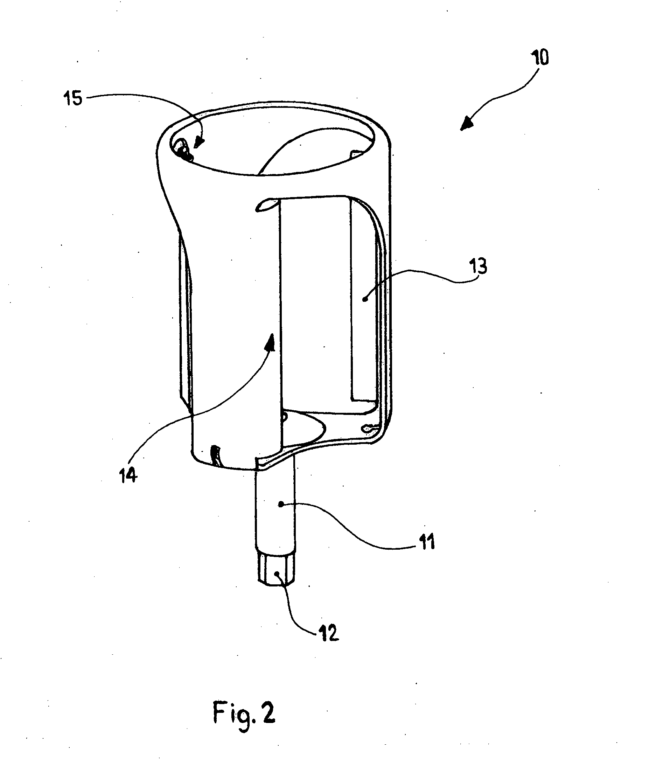

Inside the cylindrical receptacle 1 the ingredients are introduced and successively mixed by a removable impeller 10 (figure 2), rotated by a drive shaft 3.

On the outer surface of the cylindrical receptacle 1 two coils 25 and 26 are wound, such coils being part of pressurized circuits, allowing a fluid to circulate for the thermal treatments, for example cooling gas or similar.

The thermal transfer with the fluids for the thermal treatment is necessary during the production step and successively, during the exposition and selling for preserving the finished product characteristics.

The base 30 of the cylindrical receptacle 1 is provided with an opening 5 that, as herein later described in more detail, allows the fluidic communication between the cylindrical receptacle 1 and a draining collector 6 through a duct 4, axially obtained inside the drive shaft 3, according to the direction shown by the arrows F.

The drive shaft 3 is housed internally to the cylindrical body 2, by two radial ball bearings 32 and 33, the first having a single line of balls, the second a double line. This type of housing allows the rotation of the drive shaft 3 inside the fixed cylindrical body 2, and of the impeller 10, which is connected to the drive shaft 3 inside the cylindrical receptacle 1.

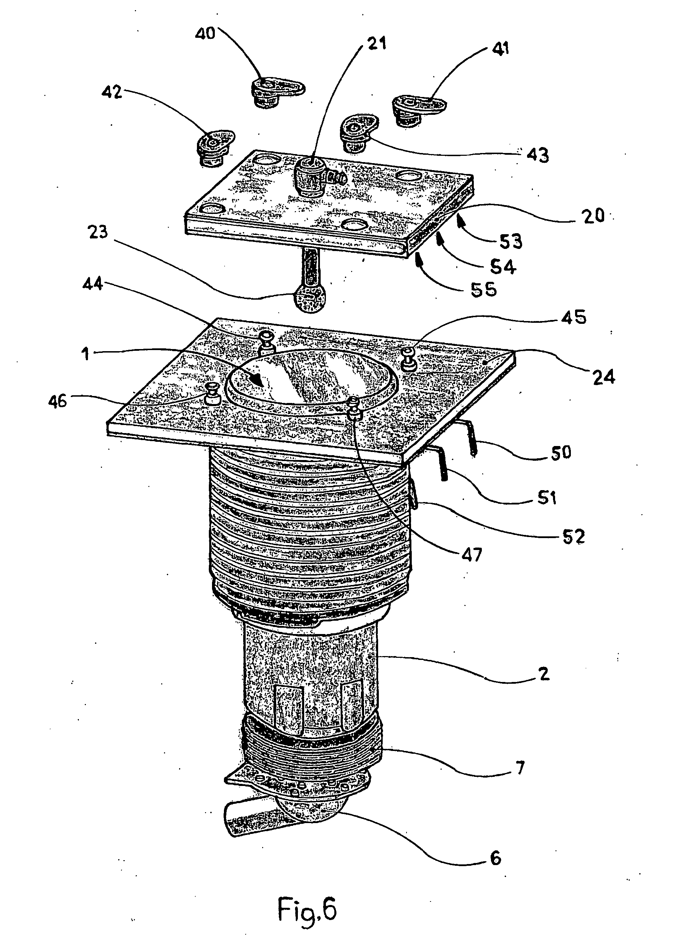

In other words, the cylindrical receptacle 1 and the cylindrical body 2 are attached to a display counter 24 (figure 6) the drive shaft 3 and the impeller 10, connected thereto, being rotatable inside such cylindrical receptacle.

The duct 4 is extended to the whole length of the drive shaft 3 and finishes at the ending in an opening 5 formed in the base 30 of the receptacle 1, allowing the fluidic communication therewith.

The opposite end of duct 4 finishes into a draining collector 6 connected by known means to a collecting receptacle, or to a waste disposal system.

Always referring to figure 1, a pulley 7 is mounted on the drive shaft 3.

The pulley 7, connected according to known means, for example a belt, to a driving means not shown, rotates the drive shaft 3, rotatably housed in the cylindrical body 2 by the radial ball bearings 32 and 33.

Figure 2 shows in detail the impeller 10 composed of a stem 11 and a plurality of blades 13 - 15, radially disposed on a cylindrical shaped body with compatible dimensions with the cylindrical receptacle 1, adapted for mixing ingredients placed in the cylindrical receptacle 1.

The particular shape of the impeller 10 and particularly of the blades 13 - 15, not reaching the cylindrical receptacle 1 axis, allows the ingredient mixing during the production step and does not impede the finished product withdrawal during the selling step.

On the stem end 11 is conveniently shaped a coupling terminal element 12 having a complementary section to a connection seat 35, axially arranged in the duct 4.

The two parts have complementary sections such that, after the coupling, the rotary motion of the drive shaft 3, provided by the pulley 7, may be transferred to the impeller 10.

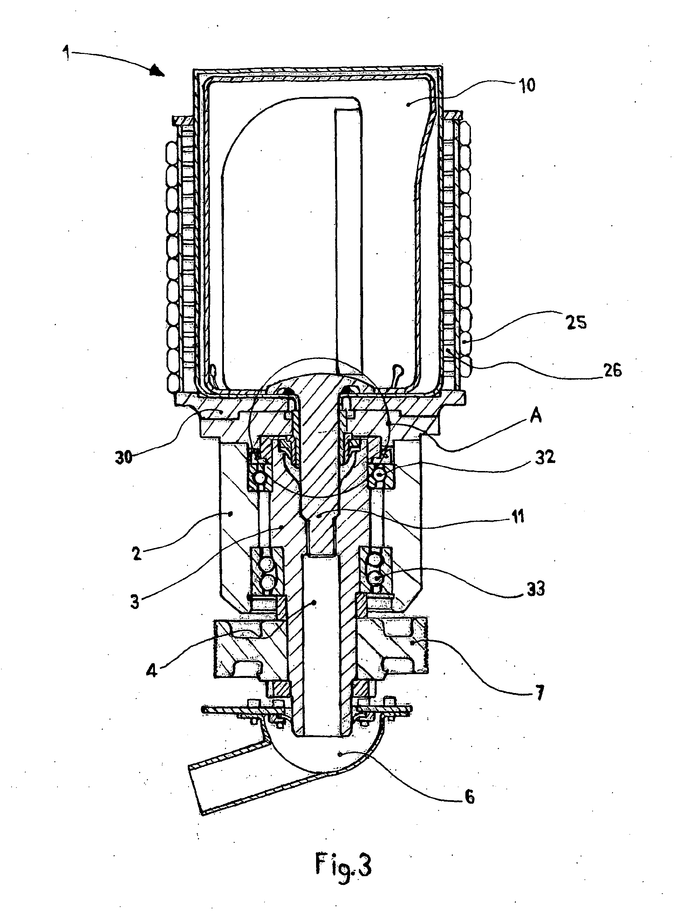

Figure 3 shows a section view of the equipment object of the present invention with the impeller 10 mounted in the cylindrical receptacle 1.

When the impeller 10 is housed in the receptacle 1, the stem 11 passes through the opening 5 of the base 30 of the cylindrical receptacle 1, and is partially housed in the connecting seat 35 of the duct 4, by the coupling terminal element 12.

The stem 11 of the propeller 10 is manually fitted into the duct 4 of the drive shaft 3, the former being provided with a just smaller diameter relative to the latter, to guarantee its coupling.

The coupling terminal element 12 is housed in the connection seat 35 with a complementary section.

In this configuration the duct 4 is not in fluidic connection with the cylindrical receptacle 1, because it is obstructed by the stem 11 of the impeller 10.

The coupling terminal element 12, housed in the seat 35 with a complementary section, allows the rotary motion transmission to the impeller 10, imposed by the pulley 7 mounted on the drive shaft 3.

It has to be noticed that the necessary ingredients for the processing step will have to be placed into the receptacle 1 after the insertion of the impeller 10. If not, they would be eliminated through the duct 4, and then the draining collector 6.

The stem insertion 11 of the impeller 10 into duct 4, seals the bottom of receptacle 1 impeding its fluidic communication with the drain 4.

The whole sealing, so that to prevent undesirable ingredient losses during the processing step and in the subsequent one, when the product remains in the receptacle 1 for exposing and selling, is further ensured by a circular sheath 100.

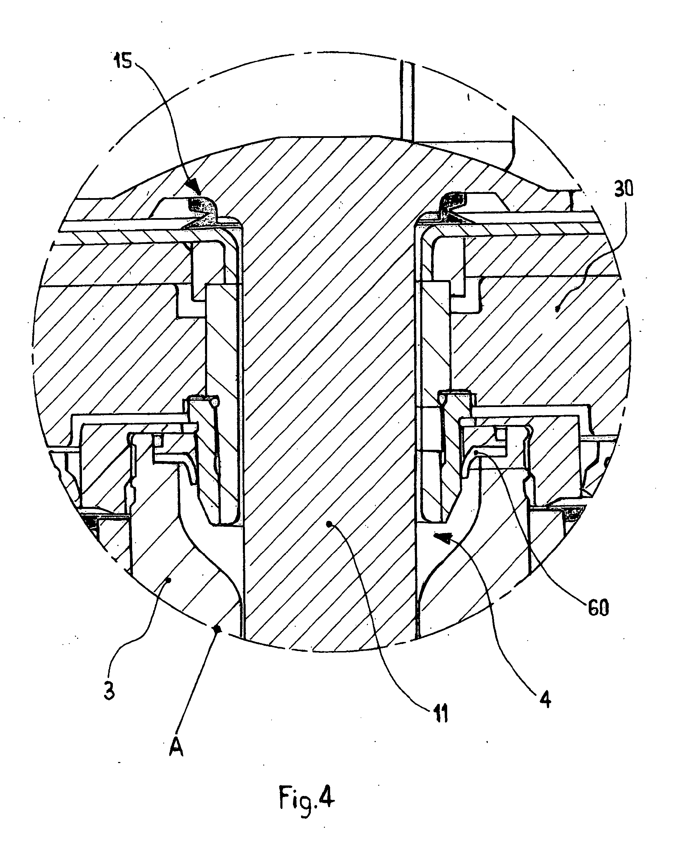

The circular sheath 100, in plastic material, is interposed between the impeller 10 and the base 30 of the receptacle 1 at the impeller insertion into the equipment (figure 4). Moreover, in the enlarged detail of figure 4, a circular sheath 60, realized in plastic material, avoids the draining fluid, passing through the duct 4, to infiltrate in the zone wherein the drive shaft 3 is mounted on the cylindrical body 2 by the radial ball bearings 32 - 33.

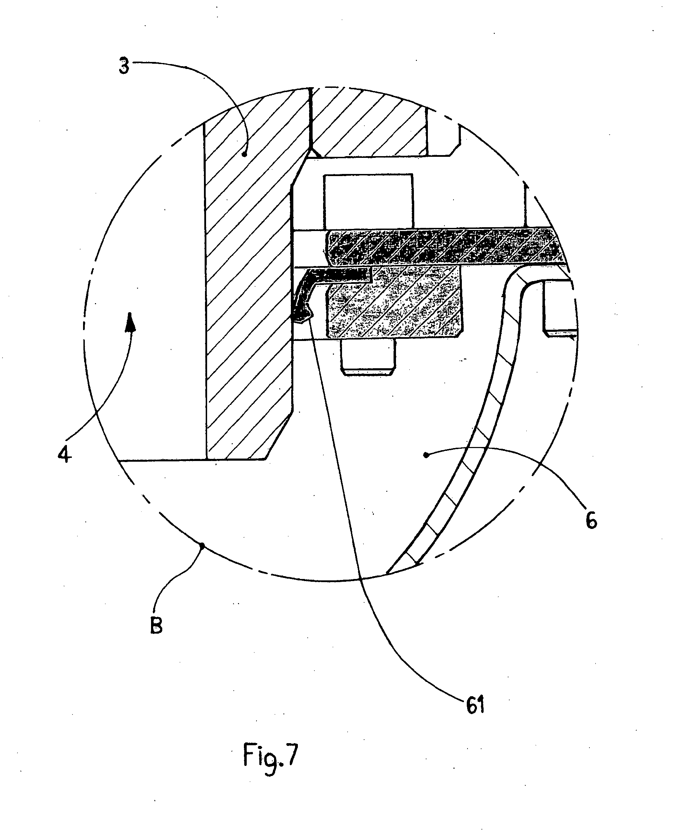

Another circular sheath 61, illustrated in figure 7, similar to that just described with reference to figure 4, prevents fluid leakages from the duct 4 in the portion comprised between the draining collector 6 and the drive shaft 3.

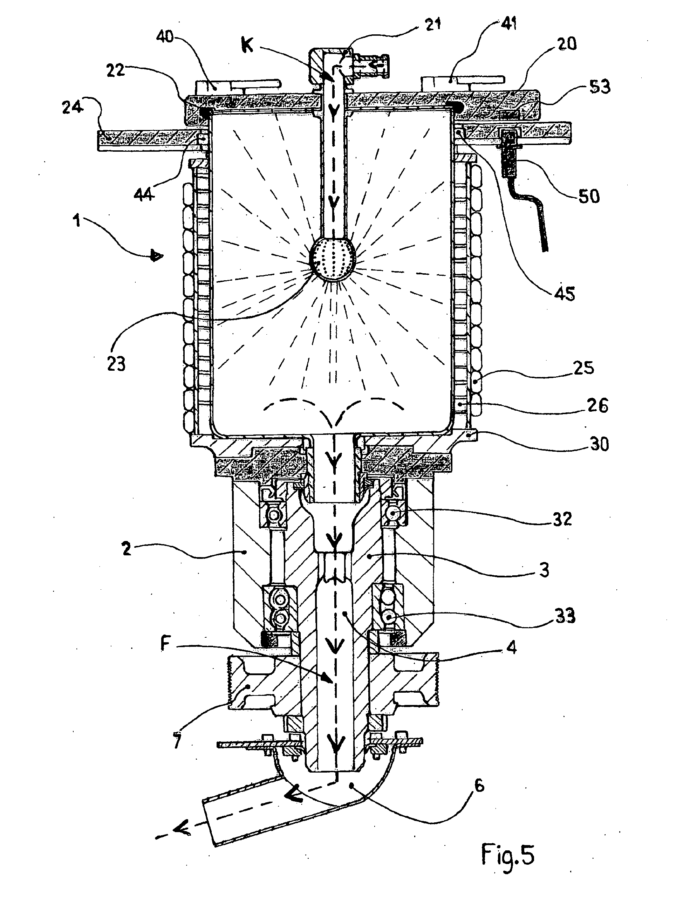

Figure 5 shows the equipment object of the invention, mounted under a counter 24, on which a special lid 20 is placed for washing and sanitizing the cylindrical receptacle 1.

For washing operations, generally carried out by a hot temperature pressurized liquid, the fluidic continuity of the receptacle 1 with the duct 4 must be guaranteed, so that the liquid could be removed.

Then at this point it is evident that in the washing and sanitizing steps the impeller 10 is not mounted on the equipment (if not the opening 5 of the base 30 would remain obstructed by the stem 11 as previously described, referring to figure 3).

The lid 20 has a shape that is complementary with that of the cylindrical receptacle 1 and is provided with an injector 21, passing through its surface.

By the injector 21 a washing and sanitizing liquid flow is injected into the cylindrical receptacle 1, starting from an outer circuit, not shown, according to the direction of the K arrows.

The injector ending 21, fitted inside the equipment, is composed, in the embodiment illustrated in figure 5, of a ball 23.

On the ball surface 23 reduced diameter holes are present, through which the washing fluid is distributed over the whole inner surface of the cylindrical receptacle 1.

Further the lid 20 is provided with a deformable sheath 22 that, placed in contact with the cylindrical receptacle 1 edge, guarantees the perfect insulation during the washing and sanitizing steps.

During these steps, the lid 20 may be maintained manually in contact with the cylindrical receptacle 1 edge or, as in the embodiment illustrated in figure5, provide locking means at the counter plane 24 wherein the equipment is housed.

Referring to the embodiment of figure 6, the locking means of the lid 20 are composed of a plurality of little levers 40 - 43 clawing rungs 44 - 47 complementarily situated on the counter surface 24.

The locking means number and displacement are variable, provided that the complementarity between parts placed over the lid 20 and those placed over the counter 24 is fulfilled.

Referring to figures 5 and 6, it can be noticed that on the counter 24 three magnetic sensors 50 - 52 are placed, to which three magnets 53 - 55 placed on the lid 20 correspond.

The sensors 50 - 52 control the feeding circuit for washing and sanitizing liquid, preventing its activation if the lid 20 is not correctly arranged and then the cylindrical receptacle 1 is not perfectly sealed.

When the lid 20 is correctly arranged on the cylindrical receptacle 1 and conveniently attached on the counter 24, the magnetic sensors 50 - 52 are coupled to corresponding magnets 53 - 55, allowing the activation of the washing liquid feeding circuit.

The preparation of foodstuffs subjected to thermal treatments by the equipment object of the present invention is realized in the client sight, being able to advantageously arrange the equipment under a display counter.

Further, not being able to remove the cylindrical receptacle 1, the exposition, the selling and the equipment washing too are carried out with the client presence.

For the production step, the equipment is used in the configuration illustrated in figure 3, that is with the impeller 10 housed in the cylindrical receptacle 1.

The necessary ingredients are poured into the cylindrical receptacle 1 that is not in fluidic communication with the drain 4.

As a matter of fact the stem 11 of the impeller 10 obstructs the opening 5 of the base 30 of the cylindrical receptacle 1, in conjunction with the sheath 100, shown in detail in figure 4, guaranteeing the perfect sealing when the impeller is rotated too. Further during the ingredient mixing the circulation along the whole outer side surface of the receptacle 1 of fluids for thermal treatment that will flow in the coils 25 and 26 is activated.

The impeller 10 insertion causes the stem 11 passing through the base 30 and partially in the drain 4, up to the complementarily partial coupling of the terminal element 12 of the impeller 10 with the connection seat 35 of the duct 4.

The stem 11 is coupled to the drive shaft 3, rotatably mounted in the cylindrical body 2 of the equipment.

A driving means, not shown, connected according to known means to the pulley 7, rotates the drive shaft 3 relatively to the cylindrical body 2 and the receptacle 1.

The impeller 10, coupled to the rotated drive shaft 3, causes the mixing of the contained ingredients in the cylindrical receptacle 1 by the blades 13 - 15. When the ingredients will be all batch frozen and the desired consistency for final product will be obtained, the impeller rotation 10 is stopped and the product may be served to client taking it out directly from the cylindrical receptacle 1.

When the selling of the whole product contained in the equipment is finished, the wash and sanitization of the cylindrical receptacle 1 will have to be carried out, so that it can be reused in a subsequent production step.

The washing step is very important to be able to use different ingredients, so that to obtain a different product, relative to that previously sold.

To allow the wash of the cylindrical receptacle 1, the impeller 10 is removed and washed separately, arranging the equipment in the illustrated configuration of figure 5.

The impeller 10 removal from the equipment allows to reestablish the fluidic communication between the duct 4 and the cylindrical receptacle 1.

As a matter of fact, the remaining contents of the equipment are removed in the arrows F direction by the subsequent passage through the opening 5 of the base 30, the duct 4 and the draining collector 6.

The wash and sanitization of the cylindrical receptacle 1 are realized mounting the special lid 20 and assuring it to the counter 24 by the locking means 40 - 43 and 44 - 47.

The washing fluid is injected by the ball 23, in the direction shown by the arrows K and eliminated through the duct 4.

## Claims

1. An equipment for preparing, exposing and retailing foodstuffs subjected to thermal treatments and mixing or stirring, comprising at least one not removable cylindrical receptacle (1) having a base (30), a removable impeller (10) arranged in every cylindrical receptacle (1), a drive shaft (3) for the impeller and at least one coil for the passage of the thermal treatment fluids (25, 26), **characterised in that** at least one drain duct (4) is axially arranged inside the drive shaft (3); a pulley is mounted on the drive shaft (3) for rotating the drive shaft (3) and the impeller (10); furthermore insulating means (60, 61, 100) are interposed between the impeller (10) and the base (30) of each cylindrical receptacle (1) as well as in the portion between the drive shaft (3) and the draining collector (6) for avoiding product leakages.

2. An equipment according to claim 1 wherein each not removable cylindrical receptacle (1) is provided with at least one opening (5) at its own base (30).

3. An equipment according to claim 1 or 2 wherein said removable impeller (10) is partially housed in said at least one drain duct (4) axially arranged inside said drive shaft (3).

4. An equipment according to one of the preceding claims wherein said drive shaft (3) is rotatably housed, by connecting means, into said cylindrical receptacle (1).

5. An equipment according to claim 4 wherein said connecting means are formed by at least one radial ball bearing (32, 33).

6. An equipment according to one of the preceding claims wherein said removable impeller (10) is coupled by clutching means, thorough complimentary parts, to said drive shaft (3).

7. An equipment according to claim 6 wherein said clutching means, through complementing parts, is formed by a terminal member (12) placed on the impeller (10) and a seat (35) obtained in said at least one drive shaft (3).

8. An equipment according to claim 1 wherein said insulating means are in the form of at least one circular gasket (60, 61 and 100).

9. An equipment according to one of the preceding claims wherein said cylindrical receptacle (1) has a removable lid (20) for its temporary sealing.

10. An equipment according to claim 9 wherein said lid (20) provides means for fluid passage.

11. An equipment according to claim 10 wherein said means for fluid passage, placed on said lid (20), are in the form of at least one injector (21) passing through the surface of said lid (20).

## Patentansprüche

1. Eine Vorrichtung zur Herstellung, zum Darbieten und zum Verkaufen von Nahrungsmittelprodukten, die wärmebehandelt und gemischt oder gerührt werden, enthaltend mindestens einen nicht auswechselbaren zylindrischen Behälter (1) mit einer Basis (30), einem auswechselbaren Flügelrad (10), das in jedem zylindrischen Behälter (1) angeordnet ist, eine Antriebswelle (3) für das Flügelrad und mindestens eine Windung für den Durchfluss der Fluide zur thermischen Behandlung (25, 26), **dadurch gekennzeichnet, dass** mindestens ein Ablasskanal (4) axial im Inneren der Antriebswelle (3) angeordnet ist; eine Rillenscheibe an der Antriebswelle (3) angeordnet ist, um die Antriebswelle (3) und das Flügelrad (10) zu drehen; weiterhin Isoliermittel (60, 61, 100) zwischen dem Flügelrad (10) und der Basis (30) von jedem zylindrischen Behälter (1) angeordnet sind, sowohl als auch in dem Bereich zwischen der Antriebswelle (3) und dem Sammler (6) zur Vermeidung von Produktleckagen.

2. Eine Vorrichtung gemäß Anspruch 1, wobei jeder nicht auswechselbare Behälter (1) mit mindestens einer Öffnung (5) in seiner eigenen Basis (30) ausgestattet ist.

3. Eine Vorrichtung gemäß Anspruch 1 oder 2, wobei jedes auswechselbare Flügelrad (10) teilweise in dem mindestens einen Ablasskanal (4) axial innerhalb der Antriebswelle (3) angeordnet untergebracht ist,

4. Eine Vorrichtung gemäß irgendeinem der vorhergehenden Ansprüche, wobei die Antriebswelle (3) drehbar, über Verbindungsmittel, in dem zylindrischen Behälter (1) untergebracht ist.

5. Eine Vorrichtung gemäß Anspruch 4, wobei die Verbindungsmittel von mindestens einem radialen Kugellager (32, 33) gebildet werden.

6. Eine Vorrichtung gemäß irgendeinem der vorhergehenden Ansprüche, wobei das auswechselbare Flügelrad (10) durch Kupplungsmittel, über komplementäre Teile, an die Antriebswelle (3) gekoppelt ist.

7. Eine Vorrichtung gemäß Anspruch 6, wobei die Kupplungsmittel, über komplementäre Teile, durch eine Endstelle (12), die auf Flügelrad (10) angeordnet ist, und eine in der mindestens einen Antriebswelle (3) erhaltenen Aufnahme (35) gebildet werden.

8. Eine Vorrichtung gemäß Anspruch 1, wobei die Isoliermittel in Form von mindestens einer ringförmigen Dichtung (60, 61, 100) gebildet werden.

9. Eine Vorrichtung gemäß irgendeinem der vorhergehenden Ansprüche, wobei die zylindrischen Behälter (1) einen abnehmbaren Deckel (20) für seinen vorübergehenden Verschluss aufweist.

10. Eine Vorrichtung gemäß Anspruch 9, wobei der Deckel (20) Mittel für den Durchgang von Fluiden aufweist.

11. Eine Vorrichtung gemäß Anspruch 10, wobei die Mittel für den Durchgang von Fluiden, die auf dem Deckel (20) angebracht sind, in Form von mindestens einem Injektor (21) ausgebildet sind, der durch die Oberfläche des Deckels (20) durchführt.

## Revendications

1. Equipement destiné à préparer, exposer et vendre au détail des denrées alimentaires soumises à des traitements thermiques et à un mélangeage ou une agitation, comprenant au moins un réceptacle cylindrique non amovible (1) ayant une base (30), un agitateur amovible (10) agencé dans chaque réceptacle cylindrique (1), un arbre d'entraînement (3) pour l'agitateur et au moins un serpentin pour le passage des fluides de traitement thermique (25, 26), **caractérisé en ce qu'**au moins un conduit de drainage (4) est axialement agencé à l'intérieur de l'arbre d'entraînement (3) ; une poulie est montée sur l'arbre d'entraînement (3) pour mettre en rotation l'arbre d'entraînement (3) et l'agitateur (10) ; en outre, des moyens d'isolation (60, 61, 100) sont intercalés entre l'agitateur (10) et la base (30) de chaque réceptacle cylindrique (1) ainsi que dans la portion entre l'arbre d'entraînement (3) et le collecteur de drainage (6) afin d'éviter des fuites de produit.

2. Equipement selon la revendication 1, dans lequel chaque réceptacle cylindrique non amovible (1) est doté d'au moins une ouverture (5) au niveau de sa propre base (30).

3. Equipement selon la revendication 1 ou 2, dans lequel ledit agitateur amovible (10) est partiellement logé dans ledit au moins un conduit de drainage (4) agencé axialement à l'intérieur dudit arbre d'entraînement (3).

4. Equipement selon l'une des revendications précédentes, dans lequel ledit arbre d'entraînement (3) est logé de façon rotative, par des moyens de raccordement, dans ledit réceptacle cylindrique (1).

5. Equipement selon la revendication 4, dans lequel lesdits moyens de raccordement sont formés par au moins un roulement à billes radial (32, 33).

6. Equipement selon l'une des revendications précédentes, dans lequel ledit agitateur amovible (10) est couplé par un moyen d'accrochage, via des pièces complémentaires, audit arbre d'entraînement (3).

7. Equipement selon la revendication 6, dans lequel ledit moyen d'accrochage, via des pièces complémentaires, est formé par un organe terminal (12) placé sur l'agitateur (10) et un siège (35) obtenu dans ledit au moins un arbre d'entraînement (3).

8. Equipement selon la revendication 1, dans lequel lesdits moyens d'isolation sont sous la forme d'au moins un joint d'étanchéité circulaire (60, 61 et 100).

9. Equipement selon l'une des revendications précédentes, dans lequel ledit réceptacle cylindrique (1) a un couvercle amovible (20) pour son étanchéité temporaire.

10. Equipement selon la revendication 9, dans lequel ledit couvercle (20) fournit des moyens de passage fluidique.

11. Equipement selon la revendication 10, dans lequel lesdits moyens de passage fluidique, placés sur ledit couvercle (20), sont sous la forme d'au moins un injecteur (21) passant à travers la surface dudit couvercle (20).
